# EUROPÄISCHE PATENTSCHRIFT

(11) **EP 0 999 085 B1**
(45) Veröffentlichungstag und Bekanntmachung des Hinweises auf die Patenterteilung: **02.10.2002**
(21) Anmeldenummer: 98120994.3
(22) Anmeldetag: 05.11.1998
(51) Int. Cl.: B60K 20/06, B60R 16/00, F16H 59/02

(54) **Einrichtung zum Steuern der Übersetzung eines automatischen oder automatisierten Kraftfahrzeuggetriebes**
Ratio control apparatus for automatic or automated motor vehicle gearbox
Dispositif de commande de rapport pour boîte de vitesses automatique ou automatisée de véhicule automobile

(43) Veröffentlichungstag der Anmeldung: 10.05.2000
(73) Patentinhaber: SIEMENS AKTIENGESELLSCHAFT, 80333 München (DE)
(72) Erfinder: Probst, Gregor, 84028 Landshut (DE)

(56) Entgegenhaltungen:
- EP-A- 0 456 511
- DE-A- 3 925 064
- DE-A- 4 311 852
- FR-A- 2 724 347
- PATENT ABSTRACTS OF JAPAN vol. 018, no. 098 (M-1562), 17. Februar 1994 & JP 05 301533 A (ISUZU MOTORS LTD), 16. November 1993 & JP 05 301533 A (ISUZU MOTORS LTD)
- "ANNOUNCEMENT" REVUE AUTOMOBILE, Bd. 90, Nr. 9, 2. März 1995, Seite 21 XP000490094

## Beschreibung

Die Erfindung betrifft eine Einrichtung nach dem Oberbegriff von Anspruch 1. Eine solche Einrichtung dient zum Steuern der Übersetzung eines automatischen oder automatisierten Kraftfahrzeuggetriebes. Sie weist auf eine elektronische Steuerung, durch die Änderungen der Übersetzung des Getriebes ausgeführt werden und ein im Bereich des Lenkrads des Kraftfahrzeugs angeordnetes Bedienungselement zum manuellen Steuern der Übersetzung des Getriebes.

Getriebe im Antriebsstrang eines Kraftfahrzeugs, die mit einer elektronischen Steuerung versehen sind, bieten zunehmend auch die Möglichkeit, daß der Fahrer durch manuelle Eingriffe die Getriebeübersetzung besser an seine Wünsche anpassen kann, als dies durch automatisierte Gangentscheidungen erreicht wird. Mit ein Grund für eine derartige Eingriffsmöglichkeit besteht darin, dem Fahrer durch selbst herbeigeführte Schaltungen oder Änderungen der Getriebeübersetzung einen "Fahrspaß" zu vermitteln.

Bei einer bekannten Betätigungseinrichtung zum manuellen Auslösen des Schaltvorgangs eines Fahrzeuggetriebes weist die Betätigungseinrichtung Wipp- oder Tipptasten auf, die derart im Lenkradbereich angeordnet sind, daß bei einer Betätigung die Hände des Fahrzeugführers am Lenkrad verbleiben können. Sie sind zum Beispiel in der Prallplatte des Lenkrads untergebracht (DE 43 11 852 A1). Bei einer solchen Betätigungseinrichtung ergibt sich insbesondere bei Rangiermanövern und bei anderen starken Lenkbewegungen die Schwierigkeit, daß das Bedienelement nun nicht mehr an der gewohnten Stelle zu erreichen ist. Im Extremfall ist es um 180° verdreht und damit die Betätigungseinrichtung in umgekehrter Funktion gegenüber der Normalstellung bei nicht eingeschlagenem Lenkrad. Das heißt, daß der Plus-Taster zum Hochschalten nun zum Beispiel vom Fahrer aus gesehen rechts statt links liegt. Dies kann zu Fehlbedienungen führen. Auch kann es bei kleinen Fahrzeugen oder bei Fahrern mit großen Händen vorkommen, daß die Bedienelemente an dem Lenkrad unbeabsichtigt berührt und damit Schaltvorgänge ausgelöst werden.

Der Erfindung liegt die Aufgabe zugrunde, eine Einrichtung der eingangs genannten Art zu schaffen, bei der die räumliche Lage des Bedienungselements unabhängig von der jeweiligen Stellung des Lenkrades ist.

Diese Aufgabe wird erfindungsgemäß durch eine Einrichtung nach Patentanspruch 1 gelöst. Zweckmäßige Weiterbildungen der Erfindung sind in den Unteransprüchen niedergelegt.

Die Vorteile der Erfindung liegen insbesondere darin, daß keine beweglichen Kabelverbindungen zu dem Bedienungselement notwendig sind. Außerdem sind keine weiteren Einbauteile in dem von dem Fahrer einsehbaren Bereich erforderlich. Fehlbedienungen bei Lenkbewegungen und Rangiermanövern werden in einfacher und wirksamer Weise verhindert. An der Lenksäule sind keine Schleifringe und beweglichen Kabelverbindungen erforderlich.

Ein Ausführungsbeispiel der Erfindung wird im folgenden anhand der Zeichnung erläutert. Es zeigen:

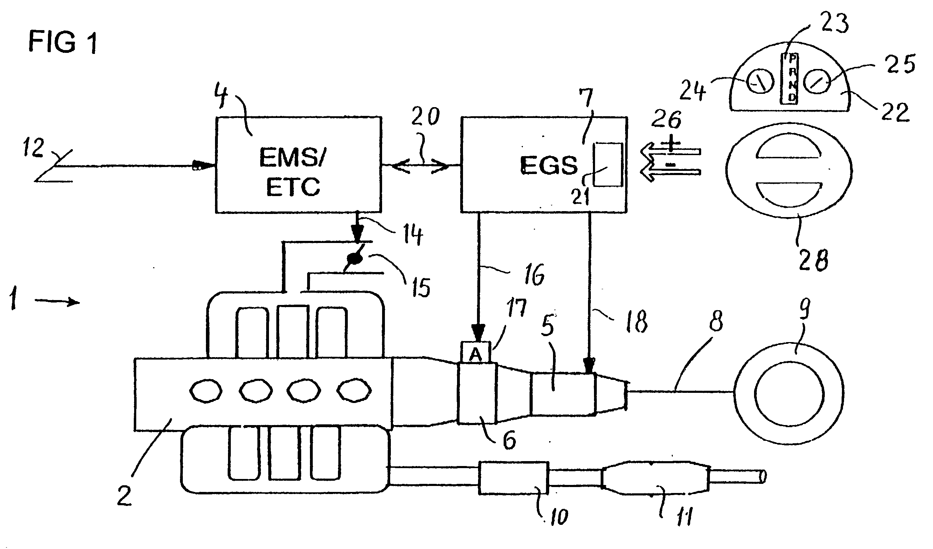

- Figur 1: den Antriebsstrang einschließlich des Getriebes eines Kraftfahrzeugs, das mit einer erfindungsgemäßen Einrichtung zum Steuern der Getriebeübersetzung versehen ist, und
- Figur 2: eine erfindungsgemäße Einrichtung zum Steuern der Getriebeübersetzung.

Ein schematisch dargestellter Antriebsstrang 1 eines Kraftfahrzeugs schließt ein: einen Motor 2 mit einer elektronischen Motorsteuerung 4, die auch die Funktion einer Antriebsschlupfregelung (ETC) durchführen kann, ein automatisches Getriebe 5 mit einem Drehmomentwandler 6 und eine elektronische Getriebesteuerung 7. Das Getriebe 5 kann als vollautomatisches Getriebe oder auch als automatisiertes Handschaltgetriebe (ASG) ausgeführt sein. Im letzteren Fall wird die Auswahl eines Getriebeganges durch den Fahrer durchgeführt, die elektronische Getriebesteuerung 7 sorgt dafür, daß das Getriebe in den gewünschten Gang geschaltet wird. Schließlich kann das Getriebe 5 auch als stufenloses Getriebe, als sogenanntes CVT-Getriebe, ausgeführt sein.

Der Radantrieb des Kraftfahrzeugs ist - da diese Bestandteile des Antriebsstranges von der Erfindung nicht betroffen sind - nur durch eine Gelenkwelle 8 und ein angetriebenes Rad 9 und die Abgasanlage durch einen Katalysator 10 und einen Schalldämpfer 11 angedeutet.

Über ein Gaspedal 12 übermittelt der Fahrer seine Wünsche an die Motorsteuerung, die ihrerseits den Motor entsprechend steuert. Angedeutet ist das durch eine Signalleitung 14, die eine Drosselklappe 15 verstellt. Nicht dargestellt sind hier, da allgemein bekannt und von der Erfindung nicht betroffen, die Steuerung des Einspritzzeitpunkts und/oder der in den Motor eingespritzten Kraftstoffmenge.

Im Falle eines vollautomatischen Getriebes steuert die Getriebesteuerung 7 über eine Signalleitung 16 eine Überbrükkungskupplung 17 für den Drehmomentwandler und über eine Signalleitung 18 die Übersetzung des Getriebes 5. Die Motorsteuerung 4 und die Getriebesteuerung 7 sind durch bidirektionale Signal- und Steuerleitungen 20, zum Beispiel in Form eines Datenbusses, miteinander verbunden und tauschen über diese Datenleitungen Informationen aus, die für einen komfortablen und ökonomischen Fahrbetrieb des Kraftfahrzeugs nötig sind.

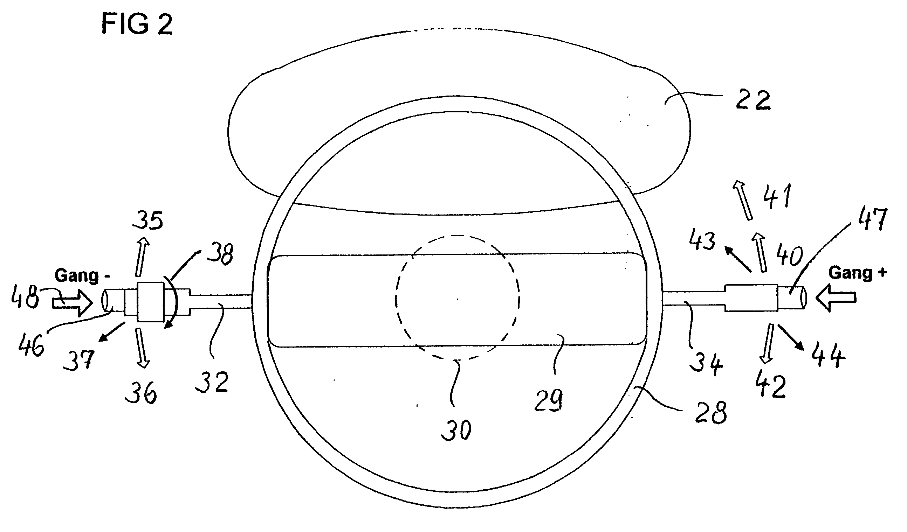

Die Getriebesteuerung 7 ist mit einer Eingangsschaltung 21 versehen, die von dem Fahrer über eine Bedienungseinrichtung eingegebene manuelle Schaltbefehle empfängt und auswertet. Die Bedienungseinrichtung zur Eingabe der Fahrerbefehle wird weiter hinten anhand von Figur 2 erläutert.

In einem Armaturenbrett 22 des Kraftfahrzeugs ist eine Anzeige 23 vorhanden, die dem Fahrer die jeweilige Fahrstufe der elektronischen oder automatischen Getriebesteuerung 7 anzeigt. Die Anzeige 23 kann eine Multifunktionsanzeige sein, falls das Kraftfahrzeug mit einer solchen versehen ist. Der zusätzliche Aufwand für die Anzeige beschränkt sich dann lediglich auf das Steuern der Anzeige durch das Programm der Getriebesteuerung 7. Angedeutet sind in der Zeichnung noch ein Tachometerinstrument 24 und ein Drehzahlmesser 25. Durch zwei Pfeile 26 sind die von dem Fahrer eingegebenen Hochschaltbefehle "+" und Rückschaltbefehle "-" angedeutet.

Vor dem schematisch angedeuteten Armaturenbrett 22 befindet sich das Lenkrad 28 mit einem Pralltopf 29, der ein hier nicht dargestelltes Betätigungselement für die Hupe enthält und unter dessen Abdeckung in der Regel ein Airbag untergebracht ist (Figur 2). Das Lenkrad ist an der Lenksäule 30 befestigt. Links und rechts sind an der Lenksäule zwei schwenkbare Hebel 32 und 34 angeordnet, mit denen der Fahrer üblicherweise eine ganze Reihe von Funktionen im Kraftfahrzeug aktiviert. Diese Funktionen sind in der Zeichnung durch Pfeile symbolisiert. Ein Pfeil 35 deutet an, daß durch nach oben Schwenken des linken Hebels 32 der Blinker auf der rechten Fahrzeugseite eingeschaltet wird. Ein Pfeil 36 deutet die Betätigung des linken Blinkers an. Ein Pfeil 37 deutet an, daß das Fernlicht oder die Hupe durch Schwenken des Hebels 32 zu dem Fahrer hin eingeschaltet wird. Mit einem durch einen Pfeil 37 angedeuteten Drehschalter wird zwischen dem Standund dem Abblendlicht umgeschaltet.

An dem rechten Hebel 34 deuten zwei Pfeile 40 und 41 das Einschalten des Scheibenwischers mit kleiner und großer Geschwindigkeit an. Ein Pfeil 42 deutet das Einschalten des Heckscheibenwischers, in der Regel mit Intervallfunktion, an. Zwei Pfeile 43 und 44 schließlich deuten an, daß durch Wegdrücken und Heranziehen des Hebels 34 von und an den Fahrer die Scheibenwaschfunktion vorne beziehungsweise hinten eingeschaltet wird.

Die vorstehend beschriebenen Funktionen der Hebel 32 und 34 sind so oder in ähnlicher Weise allgemein bekannt und üblich. Zusätzlich ist der Hebel 32 an seinem äußeren Ende mit einer Taste 46 und der Hebel 34 an seinem äußeren Ende mit einer Taste 47 versehen. Diese Tasten werden von dem Fahrer durch Drücken in Richtung auf die Lenksäule 30 betätigt. Ein Pfeil 48 zeigt an, daß durch Betätigen der Taste 46 ein Gang des Getriebes heruntergeschaltet wird, wie durch die Beschriftung **Gang "-"** angedeutet ist. Durch Betätigen der Taste 47 an dem rechten Hebel 34 wird das Getriebe einen Gang hochgeschaltet, wie durch die Bezeichnung **Gang "+"** angedeutet ist.

Ist das Kraftfahrzeug mit einem stufenlosen Getriebe versehen, wird durch etwas längeres Drücken der Tasten 46 oder 47 die Getriebeübersetzung kontinuierlich so lange verstellt, bis der Fahrer die Taste wieder losläßt. Bei stufenlosem Getriebe mit virtuellen Gängen, erfolgt die Änderung der Getriebeübersetzung durch kurzes Drücken der Tasten 46 oder 47, ähnlich wie bei einem Stufengetriebe, stufenweise.

Durch die vorstehend beschriebene Steuereinrichtung für das Getriebe 7 befindet sich die Taste (oder auch: der Taster) 47, der die Funktion "Hochschalten" zugeordnet ist immer an der gleichen Stelle in dem Kraftfahrzeuge: in dem vorliegenden Beispiel ist es die rechte Seite des Lenkrads. Die Taste 46, der die Funktion "Rückschalten" zugeordnet ist, befindet sich ebenfalls immer an der gleichen Stelle in dem Kraftfahrzeug: in dem Ausführungsbeispiel also an der linken Seite des Lenkrads. Die Gefahr von Fehlbedienungen bei stark eingeschlagenem Lenkrad ist dadurch ausgeschlossen.

Da die Hebel 32 und 34 an der Lenksäule 30 gelagert sind und nicht mit dem Lenkrad 28 gedreht werden, sind keine Kabelschlingen oder Schleifringe nötig, um die Tasten 46 und 47 an die Getriebesteuerung 7 elektrisch anzuschließen. Dadurch verringert sich sowohl der Aufwand wie die Störanfälligkeit dieser Bedienungselemente. Außerdem besteht kein räumlicher Konflikt mit dem in der Prallplatte 29 des Lenkrads 28 untergebrachten Airbag.

Gegenüber ebenfalls bekannten Bedienungsschaltern, die auch die Funktion haben, manuelle Eingriffe in die Getriebesteuerung durchzuführen, die jedoch an dem Wählhebel für das Getriebe oder in dessen Nähe angebracht sind, hat die erfindungsgemäße Lösung den Vorteil, daß der Fahrer die Hände nicht vom Lenkrad nehmen muß, und daß er auch die Schalthandlung optisch kontrollieren kann, ohne den Blick vom normalerweise in seinem Gesichtsfeld liegenden Bereich, d.h. der Windschutzscheibe und dem Armaturenbrett, abzuwenden. Daraus ergibt sich ein erheblicher Zuwachs an Sicherheit und eine Verkürzung der Reaktionszeit in einem Notfall. Gegenüber der Unterbringung der Tasten in einem zusätzlichen Bedienelement in dem Raum zwischen dem Lenkrad und dem Armaturenbrett hat die erfindungsgemäße Anordnung einen weit geringeren Raumbedarf und reduziert damit insbesondere auch die bei beengt räumlichen Verhältnissen gegebene Möglichkeit von Fehlbedienungen.

Zusammenfassend sei die erfindungsgemäße Steuereinrichtung wie folgt beschrieben. Die Einrichtung weist auf eine elektronische Steuerung 7, durch die Änderungen der Übersetzung des Getriebes 5 ausgeführt werden, und ein im Bereich des Lenkrads 28 des Kraftfahrzeugs angeordnetes Bedienungselement zum manuellen Steuern der Getriebeübersetzung. Das Bedienungselement schließt zwei Tasten 46, 47 ein, die jeweils an dem äußeren Ende eines von zwei Hebeln 32, 34 vorgesehen sind, die beiderseits der Lenksäule 30 hinter dem Lenkrad 28 angeordnet sind.

## Patentansprüche

1. Einrichtung zum Steuern der Übersetzung eines automatischen oder automatisierten Kraftfahrzeuggetriebes, die aufweist:
- eine elektronische Steuerung (7), durch die Änderungen der Übersetzung des Getriebes (5) ausgeführt werden, und
- ein im Bereich des Lenkrads (28) des Kraftfahrzeugs angeordnetes Bedienungselement zum manuellen Steuern der Übersetzung des Getriebes, **dadurch gekennzeichnet, daß**
- das Bedienungselement zwei Tasten (46, 47) einschließt, wobei jeweils eine Taste an dem äußeren Ende von einem von zwei Hebeln (32, 34) vorgesehen ist und die zwei Hebel beiderseits der Lenksäule (30) hinter dem Lenkrad (28) angeordnet sind.

2. Einrichtung nach Anspruch 1, **dadurch gekennzeichnet, daß** eine zum Hochschalten oder Erhöhen der Getriebeübersetzung dienende Taste (47) auf der rechten Seite des Lenkrads (28) und eine zu Rückschalten oder Verringern der Übersetzung dienende Taste (46) an der linken Seite des Lenkrads (28) angeordnet ist.

3. Einrichtung nach Anspruch 1 oder 2, **dadurch gekennzeichnet, daß** die Tasten (46, 47) durch Drücken in Richtung auf die Lenksäule (30) betätigt werden.

4. Einrichtung nach einem der vorhergehenden Ansprüche, **dadurch gekennzeichnet, daß** eine der Tasten (46) an einem zum Betätigen der Blinker des Kraftfahrzeugs dienenden Hebel (32) und die andere Taste (47) an einem zu Betätigen der Scheibenwischer des Kraftfahrzeugs dienenden Hebel (34) angebracht ist.

5. Einrichtung nach einem der vorhergehenden Ansprüche, **dadurch gekennzeichnet, daß** eine anhaltend gedrückte Taste (46, 47) von der Getriebesteuerung(7) als Befehl zum kontinuierlichen Ändern der Getriebeübersetzung erkannt wird.

## Claims

1. Device to control the ratio of an automatic or automated vehicle gearbox, which has:
- an electronic control system (7), which is used to make adjustments to the ratio of the gearbox (5) and
- an operating element located near to the steering wheel (28) of the vehicle for manual control of the gear ratio, **characterised in that**
- the control element includes two control keys (46, 47), with each control key having one of two levers (32, 34) at its outer end and the two levers being located on both sides of the steering column (30) behind the steering wheel (28).

2. Device according to Claim 1, **characterised in that** a control key (47) to change up or increase the gear ratio is located on the right side of the steering wheel (28) and a control key (46) to change down or reduce the ratio is located on the left side of the steering wheel (28).

3. Device according to Claim 1 or 2, **characterised in that** the control keys (46, 47) are activated by pressing them towards the steering column (30).

4. Device according to one of the preceding claims, **characterised in that** one of the control keys (46) is located on a lever (32) for activating the vehicle's indicators and the other control key (47) is located on a lever (34) for activating the windscreen wipers of the vehicle.

5. Device according to one of the preceding claims, **characterised in that** a continuously pressed control key (46, 47) is identified by the transmission control system (7) as a command to change the gear ratio continuously.

## Revendications

1. Dispositif de commande du rapport de démultiplication d'une boîte de vitesses pour véhicule automobile, automatique ou automatisée, qui présente :
- une commande électronique (7), au moyen de laquelle des variations du rapport de démultiplication de la boîte de vitesses (5) sont effectuées, et
- un organe de manoeuvre, disposé dans la zone du volant (28) du véhicule automobile, pour commander manuellement le rapport de démultiplication de la boîte de vitesses,
**caractérisé en ce que** l'organe de manoeuvre comprend deux touches (46, 47), chacune des touches étant respectivement prévue à une extrémité extérieure d'un parmi deux leviers (32, 34), les deux leviers étant disposés de part et d'autre de la colonne de direction (30), derrière le volant (28).

2. Dispositif selon la revendication 1, **caractérisé en ce qu'**une touche (47), servant à la montée ou à l'augmentation du rapport de démultiplication, est disposée sur le côté droit du volant (28), et une touche (46), servant à la descente ou à la diminution du rapport de démultiplication, est disposée sur le côté gauche du volant (28).

3. Dispositif selon la revendication 1 ou 2, **caractérisé en ce que** les touches (46, 47) sont actionnées par poussée dans la direction de la colonne de direction (30).

4. Dispositif selon l'une des revendications précédentes, **caractérisé en ce que** l'une des touches (46) est montée sur un levier (32) servant à l'actionnement des clignotants du véhicule automobile, et l'autre touche (47) est montée sur un levier (34) servant à l'actionnement de l'essuie-glace du véhicule automobile.

5. Dispositif selon l'une des revendications précédentes, **caractérisé en ce qu'**une poussée prolongée d'une touche (46, 47) est identifiée par la commande de boîte de vitesses (7) comme un ordre de modification continu du rapport de démultiplication.
